# EUROPEAN PATENT APPLICATION

(11) **EP 4 763 309 A1**
(43) Date of publication of application: **24.06.2026**
(21) Application number: 24222962.3
(22) Date of filing: 23.12.2024
(51) Int. Cl.: B01D 46/24, B01D 46/71

(54) **A FILTER CLEANING DEVICE AND A GAS PURIFICATION SYSTEM COMPRISING SUCH DEVICE**

(71) Applicant: Nederman Holding AB, 251 06 Helsingborg (SE)
(72) Inventor: Wijk, Anders, 25106 Helsingborg (SE)
(74) Representative: AWA Sweden AB

(57) **Abstract**

A filter cleaning device (1) is provided. The device comprises a holder (100), a gas distributing pipe (200), a counterweight (300) and a swivel (400). The swivel is rotatably connected to the holder. The gas distributing pipe and the counterweight are connected to the swivel to allow a rotational sweeping motion of the pipe and the counterweight around a longitudinal centre axis of the holder. The pipe and the counterweight are arranged diametrically opposite each other on the swivel. The pipe comprises along a longitudinal extension thereof a first plurality of gas emitting holes configured to allow emission of a gaseous cleaning flow with an angle of 0-15 degrees in view of a virtual plane (VP) spanned by the pipe and the longitudinal centre axis of the holder. Further, the pipe comprises along the longitudinal extension thereof a second plurality of gas emitting holes configured to allow emission of a gaseous propelling flow with an angle of 75-105 degrees in view of said virtual plane. Also, a gas purification system (1000) using such filter cleaning device is provided.

## Description

### Technical field

The present invention refers to a filter cleaning device, a gas purification system comprising such filter cleaning device, and the use of such filter cleaning device.

### Technical background

It is well known to use gas purification systems that comprise a tubular filter element to remove particulate matter from the gas. The tubular filter element is arranged in a filter box having an inlet for receiving dirty gas and an outlet for releasing cleaned gas. The particulate matter accumulates over time on the exterior side, also known as the dirty side, of the filter element. The accumulated particulate matter is removed by using a filter cleaning device. The life length of the filter element can thereby be extended.

The filter cleaning device is typically supported, indirectly or directly, in both ends to the filter box. The filter cleaning device is driven by an electrical motor that rotates the cleaning device inside the tubular filter element while distributing a cleaning gas flow in the radial direction towards the inner wall of the tubular filter element. This causes a mechanical impact to the filter wall that in turn causes accumulated particulate matter on the exterior side of the filter element to be removed and fall to the ground.

The known filter cleaning devices are complicated and time consuming to remove when it is time to exchange the filter element, and there is also a risk that the personnel come in contact with the accumulated particulate matter and with the dirty filter element, which should be avoided due to health risks. Also, the motor driven filter cleaning devices are relatively expensive.

There is hence a need for an alternative design of the filter cleaning device that allows a simplified maintenance of the filter box and a simplified exchange of tubular filter elements. There is also a need for a filter cleaning device that has a simplified design, which allows an improved cleaning effect, which has a lower weight and that is less expensive to manufacture.

### Summary

One object of the present invention is to provide a filter cleaning device that has a low weight and that can be rotated with an even rotational sweeping motion inside a tubular filter at high speeds without causing any undue imbalance.

Another object is to provide a filter cleaning device that is easy to handle during filter maintenance, no matter if it refers to mounting of a fresh tubular filter, or to remove a dirty filter.

Yet another object is to provide a filter cleaning device that has a simplified design that makes it less expensive to manufacture.

These and other objects are solved by a filter cleaning device, the device comprising a holder, a gas distributing pipe, a counterweight and a swivel, wherein
the swivel is rotatably connected to the holder;
the gas distributing pipe and the counterweight are connected to the swivel to allow a rotational sweeping motion of the gas distributing pipe and the counterweight around a longitudinal centre axis of the holder;
the gas distributing pipe and the counterweight are arranged diametrically opposite each other on the swivel;
wherein the gas distributing pipe along a longitudinal extension thereof comprises a first plurality of gas emitting holes configured to allow emission of a gaseous cleaning flow with an angle of 0-15 degrees in view of a virtual plane spanned by the gas distributing pipe and the longitudinal centre axis of the holder; and
wherein the gas distributing pipe along the longitudinal extension thereof further comprises a second plurality of gas emitting holes configured to allow emission of a gaseous propelling flow with an angle of 70-110 degrees in view of said virtual plane.

By the combination of features referred to above, a number of different technical effects are provided. More precisely, the gas distribution pipe and the counterweight that are arranged on opposite sides of the swivel allow a well-balanced and hence a low-frictional rotational movement of the filter cleaning device. This means that there is no explicit need for any electrical motor to propel the filter cleaning device. Instead, the rotational propulsion is provided for by the use of a portion of the gaseous flow that is used as cleaning gas. More precisely, the filter cleaning device is designed to distribute a flow of pressurized gas from the gas distributing pipe via two sets of holes. The first set, i.e., the first plurality of holes, is configured to provide a cleaning gas flow with a small angle towards the inner wall of the tubular filter, more precisely with an angle of 0-15 degrees in view of a virtual plane that is spanned by the gas distributing pipe and the longitudinal centre axis of the holder. The purpose of the first plurality of holes is to cause a mechanical vibration to the filter wall to thereby release a cake of particulate matter that is accumulated over time on the outer surface of the filter element. By the small angle, the energy in the emitted gas flow is strong enough to cause the necessary mechanical vibration to remove accumulated particulate matter form the outer filter surface, but still, the risk that the emitted gas flow causes an impinging effect that ruptures the filter wall is reduced. The angle can be within 0-15 degrees but is more preferred within 5-10 degrees.

The second set of holes, i.e., the second plurality of holes, oriented to emit a gaseous flow with an angle of 70-110 degrees in view of said virtual plane, is used to cause a rotational propulsion of the filter cleaning device inside the tubular filter element. The interval may be 70-110 degrees but is more preferred within 80-100 degrees. The closer to 90 degrees, the better propulsion effect. The number of holes in the second plurality of holes is preferably substantially lower than the number of holes in the first plurality of holes.

The counterweight that is arranged on one side of the swivel, opposite the gas distributing pipe, provides a balancing effect to the rotational movement of the filter cleaning device. This in turn causes less friction to the swivel and its bearings that must be overcome by the energy in the gas flow that is emitted from the second plurality of holes.

The combined effect allows the provision of a filter cleaning device that presents an overall improved cleaning effect of a tubular filter without causing an undue wear to its filter wall. Further, the use of the pressurized gas as propulsion medium allows that any electrical motor can be omitted. Additionally, the reduced unbalance resulting from the counterweight allows for an overall reduced friction which in turn allows an improved usage of the inherent energy in the pressurized gas flow that is supplied to the cleaning device, both in terms of cleaning and propulsion. And, not at least, the overall improved balance allows for a swivel that uses cheaper roller bearings rather than expensive ball bearings.

The plurality of holes in the first plurality of holes may be equidistantly distributed along the longitudinal extension of the gas distributing pipe. The skilled person realizes that the number of holes should be adapted to the length of the gas distributing pipe. The number of holes provided should be sufficient to be able to control the inherent energy in the cleaning gas flow that is emitted from the gas distributing pipe towards the inner wall of the tubular filter element. The inherent energy in the gas flow that is emitted from the plurality of holes in the first plurality of holes should be sufficient to cause a mechanical vibration to the envelope wall of the tubular filter that is strong enough to break off accumulated particulate matter from the outer, dirty side of the tubular filter element. Still, it must not be so strong that the holes cause an impinging effect that ruptures the filter material. The skilled person realizes that the number of holes depend at least on the length of the gas distributing pipe. The pressure drop should not be too large as seen along the length of the gas distributing pipe. Rather, the cleaning should be substantially even along the full length of the tubular filter element. As a non-limiting example, a fluid distributing pipe having a length of 400 mm may have 20 holes equidistantly distributed along the length of the pipe.

The second plurality of holes may comprises less than five holes, and more preferred three, or less than three holes distributed along the longitudinal extension of the gas distributing pipe. In the event of two hole only, it is preferred that one hole is arranged adjacent a first end of the gas distributing pipe and that one hole is arranged in a second, opposing end of the gas distributing pipe. In the event of three holes, it is it is preferred that one hole is arranged adjacent a first end of the gas distributing pipe, that one hole is arranged in a second, opposing end of the gas distributing pipe, and that the third hole is arranged in a central position between the other two holes. A low number of holes in the second plurality of holes, as compared to the number of holes in the first plurality of holes allows a higher energy content in the gas flow that is emitted from the second plurality of holes, which in turn allows a higher propulsion force.

The counterweight may be arranged in level with or below the swivel. By arranging the counterweight below the swivel, an improved overall balancing effect may be achieved during rotation of the filter cleaning device. The vertical position of the counterweight in view of the swivel may be adapted to the length of the gas distributing pipe. Other influencing parameters are the bending strength of the gas distributing pipe and the rotational speed of the filter cleaning device.

The filter cleaning device and the gas distributing pipe may be configured to be connected to a source of pressurized gas. The connection may be made via a connecting tube.

The gas distributing pipe may be substantially straight. It is preferred that that the gas distributing pipe is parallel with the longitudinal centre axis of the holder.

The gas distributing pipe may be adjustably connected to the swivel. This allows the gas distributing pipe to be turned about its own longitudinal axis to thereby allow the angle of the holes in the first plurality of holes to be finetuned in view of the virtual plane.

The holes in one or both of the first and second plurality of gas emitting holes may be provided with nozzles. The nozzles in the first and second plurality of holes may be designed to provide different flow patterns. As a non-limiting example, the nozzles in the first plurality of holes may provide different patterns as seen along the length of the flow distributing pipe to thereby accommodate for pressure fall. Alternatively, nozzles in the first and second plurality of holes may provide different flow patterns.

The holes in the first and second pluralities of gas emitting holes may have different sizes and/or cross sections. By different sizes and/or cross sections it is possible to control the energy in the gas that is emitted from the gas distributing pipe. It is there by possible, not only to tailor the cleaning effect by the holes in the second plurality which emit a cleaning flow, but also the propelling effect that is achieved by the gas that is emitted by the holes in the second plurality of holes. The energy provided by the plurality of holes in the first plurality of holes should be sufficient to cause a mechanical vibration of the envelope wall of the tubular filter element that is strong enough to break off accumulated particulate matter from the outer, dirty side of the tubular filter element. Still, it must not be so strong that the holes cause an impinging effect that ruptures the filter material. Also, the pressure drop along the pipe should not be too big with the risk of an uneven cleaning effect along the longitudinal extension of the filter element.

The filter cleaning device comprises a continuous gas conduit extending through the holder, the swivel and the gas distributing pipe. The gas distributing pipe has a closed free end.

The filter cleaning device may be configured to be suspended to extend in a downwardly extending direction inside the tubular filter element. The filter cleaning device may be configured to be suspended so that the longitudinal centre axis of the holder of the filter cleaning device, and hence the rotation axis of the filter cleaning device, coincides with the longitudinal centreline of the tubular filter element.

The holder may comprise a connecting arrangement allowing the filter cleaning device to be removably connected to a support surface of a tubular filter element or to a support surface in a filter box with the filter cleaning device hanging downwardly into the tubular filter element. The only connection between the filter box/tubular filter element and the filter cleaning device is accordingly at the upper end of the filter cleaning device.

According to another aspect, a gas purification system is provided that comprises a filter box containing a tubular filter element, a support surface being part of or arranged above the tubular filter element, and a filter cleaning device according to any of the features 1-11, said filter cleaning device being removably connected to the support surface.

This means that the filter cleaning device is configured to be mounted in a hanging mode from the top down into the tubular filter element. The filter cleaning device may be secured to the support surface by one or more fastening members, such as bolts or quick couplings. When removing the fastening members, the engagement between the filter cleaning device and the support surface is released and the filter cleaning device can be lifted by a linear vertical movement. This reduces the risk of any contact with the filter element and especially with its exterior, dirty side. The support surface may be part of the tubular filter element or be part of the filter box.

The features, functionality and advantages of the filter cleaning device as such have been thoroughly discussed above and these are equally applicable to a gas purification system using such filter cleaning device. To reduce undue repetition, reference is made to the discussions above.

The filter cleaning device may be arranged to extend in a downward direction inside the tubular filter element with the longitudinal centre axis of the holder of the filter cleaning device coinciding with the longitudinal centreline of the tubular filter element.

The gas purification system may be part of a welding system.

According to yet another aspect, the invention refers to the use of a filter cleaning device according to any of claims 1-11 in a filter box forming part of a welding system. The features, functionality and advantages of the filter cleaning device 1 as such have been thoroughly discussed above and these are equally applicable to the use of such filter cleaning device 1. To reduce undue repetition, reference is made to the discussions above.

Further objects and advantages of the present invention will be obvious to a person skilled in the art reading the detailed description given below describing different embodiments.

### Brief description of the drawings

The invention will be described in detail with reference to the schematic drawings.
Fig. 1A discloses a schematic perspective side view of the filter cleaning device.
Fig. 1B discloses a schematic cross-sectional perspective side view of the filter cleaning device.
Fig. 2 discloses a schematic side view of the filter cleaning device when mounted to a tubular filter element.
Fig. 3 discloses a schematic top view of the filter cleaning device when mounted in a tubular filter element.
Fig. 4 discloses a schematic cross sectional side view of a filter box containing a tubular filter element and a filter cleaning device according to the invention.

### Detailed description

In the following, one embodiment of a filter cleaning device 1 according to the invention will be described.

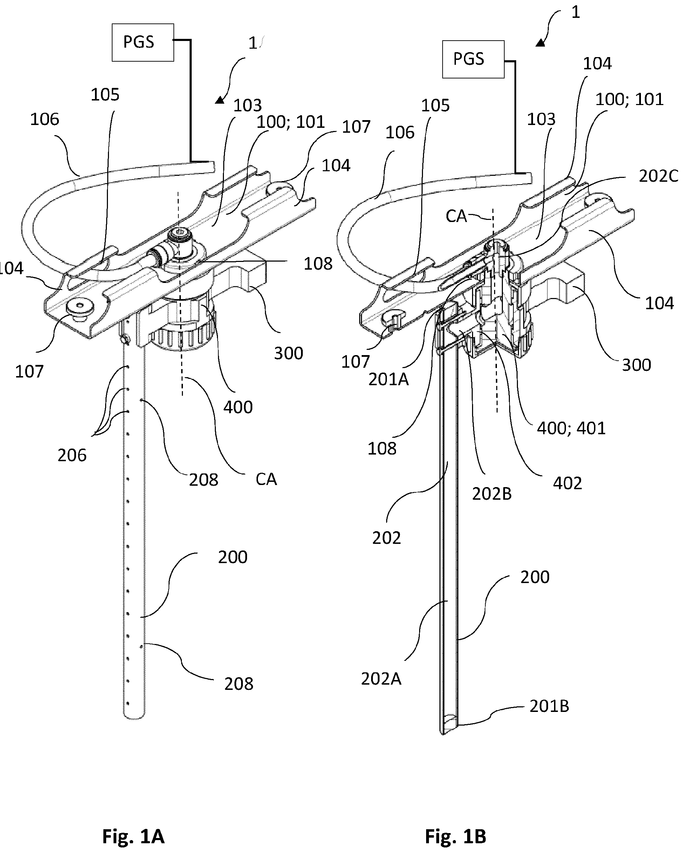

Starting with Figs. 1A and 1B, the overall design of the filter cleaning device 1 is disclosed. The filter cleaning device 1 comprises a holder 100, a gas distributing pipe 200, a counterweight 300 and swivel 400. The swivel 400 is rotatably connected to the holder 100. The gas distributing pipe 200 and the counterweight 300 are connected to the swivel 400 to allow a common rotational sweeping motion of the gas distributing pipe 200 and the counterweight 300 around a longitudinal centre axis CA of the holder 100. The gas distributing pipe 200 and the counterweight 300 are arranged diametrically opposite each other on the swivel 400. The gas distributing pipe 200 and the counterweight 300 are radially displaced in view of the longitudinal centre axis of the holder 100.

The holder 100 is in the disclosed embodiment exemplified as a longitudinal bracket 101. The bracket 101 has a substantially flat bottom wall 103 that merges with two opposing side walls 104. One of the side walls 104 comprises a hole 105 that receives a hose 106 that is used to connect the filter cleaning device 1 to an external source of pressurized gas (PGS).

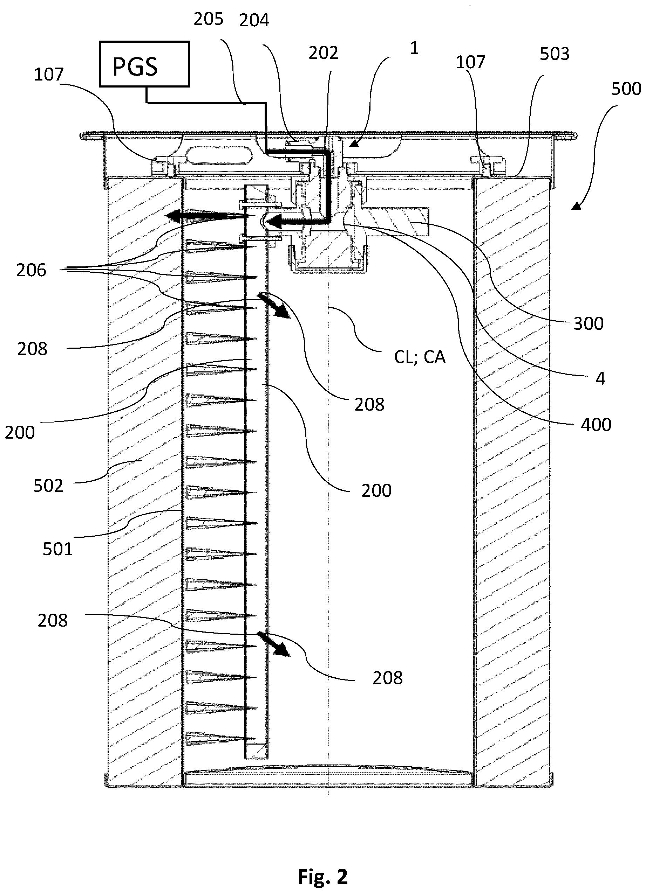

The holder 100 comprises a connecting arrangement 107 that allows the filter cleaning device 1 to be removably connected to a support surface 503 of a tubular filter element 500 with the filter cleaning device 1 hanging downwardly into the tubular filter element 500, see Fig. 2. The support surface 503 may alternatively be part of a filter box. Accordingly, the filter cleaning device 1 is configured to be suspended in a hanging manner concentrically inside a tubular filter element 500. The connecting arrangement 107 is in the disclosed embodiment exemplified as two fasteners that are used to connect the filter cleaning device 1 to the tubular filter element 500 as will be further described below.

The holder 100 supports the swivel 400 that extends via a through-going opening 108 in the bottom wall 103. The swivel 400 has an axial extension and is configured to rotate about the longitudinal centre axis CA of the holder 100 by means of a bearing 401. A swivel 400 is a such well known in the art and is not further discussed.

The gas distributing pipe 200 connects to an axially extending side wall 402 of the swivel 400. The gas distributing pipe 200 is thereby radially displaced in view of the longitudinal centre axis of the holder 100. The gas distributing pipe 200 is disclosed as a straight pipe with two opposing closed ends 201A; 201B. The gas distributing pipe 200 is preferably substantially straight. It is also preferred that the gas distributing pipe 200 is parallel with the longitudinal centre axis CA of the holder 100.

The filter cleaning device 1 has an internal gas channel 202 that comprises three portions 202A-202C. A first portion 202A of the gas channel 202 extends along the longitudinal extension of the gas distributing pipe 200. The first portion 202A of the gas channel 202 merges in a first end of the gas distributing pipe 200 with a second portion 202B that extends through the swivel 400. The second portion 202B of the gas channel 202 merges with a third portion 202C that extends through the holder 100 where it connects the gas channel 200 to a coupling 203. A continuous gas channel 202 is thereby provided along the gas distributing pipe 200, the swivel 400, the holder 100 and to the coupling 203. The coupling 203 comprises a connector 204 that allows the continuous gas channel 202 to be connected to the external source of pressurized gas PGS. This can, as is illustrated, be made via flexible hose 205.

The gas distributing pipe 200 comprises along a longitudinal extension thereof a first plurality of gas emitting holes 206 and a second plurality of gas emitting holes 208.

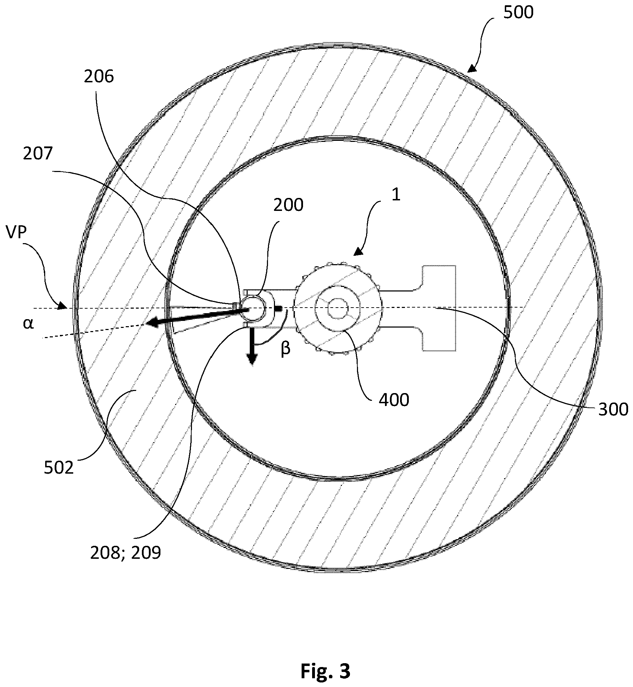

Now turning to Figs. 2 and 3. The first plurality of gas emitting holes 206 are arranged along a wall portion of the gas distributing pipe 200 that is configured to substantially diametrically face an inner wall 501 of the tubular filter element 500. The first plurality of holes 206 are oriented with an angle α of 0-15 degrees in view of a virtual plane VP that is spanned by the gas distributing pipe 200 and the longitudinal centre axis of the holder 100, and more preferred within the range of 5-10 degrees to said virtual plane VP. The first plurality of holes 206 are configured to allow emission of a gaseous cleaning flow with said angle α towards the inner wall 501 of the tubular filter element 500.

The first plurality of holes 206 are equidistantly distributed along the longitudinal extension of the gas distributing pipe 200. The skilled person realizes that the number of holes 206 should be adapted to the length of the gas distributing pipe 200. The number of holes 206 should be sufficient to be able to control the inherent energy in the gas flow that is emitted from the gas distributing pipe 200 towards the inner wall 501 of the tubular filter element 500. The inherent pressure in the gas that is emitted from the first plurality of holes 206 should be sufficient to cause a mechanical vibration of envelope wall 502 of the tubular filter element 500 that is strong enough to break off cakes of accumulated particulate matter on the outer, dirty side of the tubular filter element. Still, it must not be so strong that the holes 206 cause an impinging effect that ruptures the filter material. The skilled person realizes that the number of holes in the first plurality of holes 206 depend at least on the length of the gas distributing pipe 200. Still, the pressure drop should not be too large as seen along the length of the gas distributing pipe 200.

The holes in the first plurality of holes 206 may be provided with optional nozzles 207, see Fig. 3. The nozzles 207 may be chosen to provide a desired gas distribution pattern.

The gas distributing pipe 200 may be adjustably connected to the swivel 400. This allows the gas distributing pipe 200 to be turned about its own longitudinal axis to thereby allow the angle α of the holes 206 in the first plurality of holes to be finetuned in view of the virtual plane VP.

The second plurality of gas emitting holes 208 are oriented with an angle β of 70-110 degrees in view of said virtual plane VP, and more preferred within a range of 80-100 degrees in view of said virtual plane VP. Optimally, the angle should be 90 degrees. The second plurality of holes 208 are configured to allow emission of a gaseous propelling flow.

The number of holes in the second plurality of holes 208 is preferably substantially lower than the number of holes in the first plurality of holes 206. The number of holes 208 may by way of example be two or three. The holes 208 are preferably distributed along the longitudinal extension of the gas distributing pipe 200. In the event of two holes 208, as is disclosed in Fig. 2, it is preferred that one hole is arranged adjacent a first end of the gas distributing pipe 200 and that one hole is arranged in a second, opposing end of the gas distributing pipe 200. In the event of three holes, it is it is preferred that one hole is arranged adjacent a first end of the gas distributing pipe, that one hole is arranged in a second, opposing end of the gas distributing pipe, and that the third hole is arranged in a central position between the other two holes. A low number of holes in the second plurality of holes 208, as compared to the number of holes in the first plurality of holes 206 allows a higher energy content in the gas flow that is emitted from the second plurality of holes 208, which in turn allows a higher propulsion force.

The holes in the second plurality of holes 208 may be provided with optional nozzles 209.

The optional nozzles 207, 209 in the first and second plurality of gas emitting holes 206, 208 may be designed to provide different flow patterns.

The holes in the first and second plurality of gas emitting holes 206, 208 may have different sizes and/or cross sections. By different sizes and/or cross sections it is possible to control the energy in the gaseous gas that is emitted from the gas distributing pipe 200. It is thereby possible, not only to tailor the cleaning effect by the holes 206 that emit a cleaning flow, but also the propelling effect that is achieved by the gaseous flow that is emitted by the holes in the second plurality of holes 208 in the gas distributing pipe 200. The energy provided by the plurality of holes in the first plurality of holes 206 should be sufficient to cause a mechanical vibration of the envelope wall 502 of the tubular filter element 500 that is strong enough to break off accumulated particulate matter from the outer, dirty side of the tubular filter element 500. Still, it must not be so strong that the holes 206 cause an impinging effect that ruptures the filter material. Also, the pressure drop along the fluid distributing pipe 200 should not be too large with the risk of an uneven cleaning effect along the longitudinal extension of the tubular filter element.

Now turning to Fig. 2. The counterweight 300 is arranged in the same end of the gas distributing pipe 200 as the holder100 and the swivel 400. The counterweight 300 is disclosed as being arranged in level with the swivel 400. The counterweight 300 may alternatively be arranged below the swivel 400. No matter vertical position, the centre of gravity of the counterweight 300 is always radially displaced in view of the rotational axis CA of the holder 100. The counterweight 300 may be provided as solid body with a mass that is larger than the mass of the gas distributing pipe 200. The gas distributing pipe 200 and the counterweight 300 may be arranged on different radial distances in view of the longitudinal centre axis of the holder. The radial distance of the counterweight 300 depends in the mass of the counterweight 300.

The vertical position of the counterweight 300 in view of the swivel 400 may be adapted to the length of the gas distributing pipe 200. Other influencing parameters are the bending strength of the gas distributing pipe 200 and the rotational speed of the filter cleaning device 1.

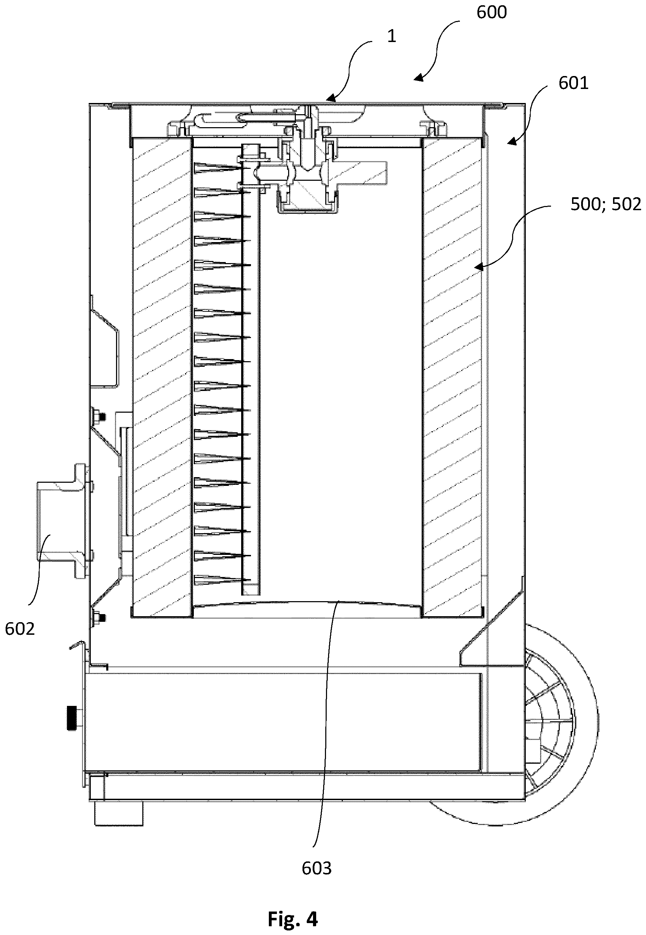

In the following, the operation and functionality of the filter cleaning device 1 will be described with reference to Figs 2, 3 and 4. The filter cleaning device 1 is configured to be used in a gas purification system 600 which is best disclosed in Fig. 4. The gas purification system 600 may as a non-limiting example be part of a welding system.

The gas purification system 600, see Fig. 4, comprises a filter box 601 which in its interior contains a tubular filter element 500 of the type described above. The tubular filter element 500 comprises tubular envelope wall 502 made of a gas permeable filter material. The filter box 601 comprises at least one gas inlet 602 and a gas outlet 603. The at least one gas inlet 602 is configured to communicate with a first suction source (not shown) which is configured to collect and direct dirty gas/smoke/fume into the filter box 601. The first suction source may by way be a suction hood close to a welding robot. The gas outlet 603 is arranged in communication with the interior or the tubular filter element 500 and is in turn connected to a second suction source (not shown) that is configured to draw the dirty gas/smoke/fume from the filter box 601, through the envelope wall 502 of the gas permeable filter element 500 and out from the filter box 601 via the gas outlet 603. As the dirty gas/smoke/fume is guided through the tubular filter element, the particulate matter in the dirty gas/smoke/fume will be trapped on the exterior side of the envelope wall 502 of tubular filter material 500. Over time, the particulate matter will accumulate on the exterior side of the envelope wall 502 of the tubular filter element 500 and form what is known in the art as a filter cake. When the amount of accumulated matter is too high, there will be a pressure drop which in turn will force the motor to work harder. To mitigate this, the tubular filter element 500 should be cleaned on a regular basis. This is according to the invention made by the filter cleaning device 1 of the type that has been described above that is arranged inside the tubular filter element 500.

The filter cleaning device 1, best seen in Figs. 2 and 3, is arranged in a suspended manner from the top of the tubular filter element 500 whereby it extends in a downwardly extending direction inside the tubular filter element 500. The filter cleaning device 1 extends concentrically with the longitudinal centre line of the tubular filter element 500. The filter cleaning device 1 is removably connected to the upper support surface 503 of the tubular filter element 500 with the filter cleaning device 1 hanging downwardly into the tubular filter element 500. Alternatively, the support surface may be part of the filter box 600 that houses the tubular filter element.

The connecting arrangement 107 of the holder 100 allows the filter cleaning device 1 to be removably connected to the tubular filter element 500.

A connector 204 of the filter cleaning device 1 is connected to the source of pressurized gas PGS by the hose 205. Pressurized gas is guided from the pressurized gas source via the hose 205 and into the gas distributing pipe 200 via the continuous gas channel 202. When reaching the gas distributing pipe 200, the gas will leave the gas distributing pipe 200 via the first and second plurality of gas emitting holes 206, 208.

Now turning to Fig. 3. The gas that leaves the gas distributing pipe 200 via the first plurality of holes 206 will be directed with no or with a small angle α in view of the virtual plane VP that is spanned by the gas distributing pipe 200 and the longitudinal centre axis of the holder 100. The emitted gas flow from the first plurality of holes 206 cause a mechanical vibration to the envelope wall 502 of the tubular filter element that releases the cake of particulate matter that has accumulated on the outer surface of the envelope wall 502. By the angle α, the energy in the emitted gas flow is strong enough to cause the necessary mechanical vibration, but still, the risk that the emitted gas flow causes an impinging effect that ruptures the filter material is reduced. The holes in the first plurality of holes are equidistantly distributed along the longitudinal extension of the gas distribution pipe, whereby a larger portion of the longitudinal extension of the tubular filter element 500 will be subjected to the cleaning gas flow.

The gas that leaves the gas distributing pipe 200 via the second plurality of holes 208 will be directed with a large angle βin view of said virtual plane VP and cause a rotational propulsion of the filter cleaning device 1. The angle may be in the interval of 70-110 degrees but is more preferred within 80-100 degrees. The closer to 90 degrees, the better propulsion effect. The number of holes in the second plurality of holes 208 is preferably substantially lower than the number of holes in the first plurality of holes 206. It is sufficient with two or three holes, where one hole is arranged in a first end of the gas distributing pipe 200 and one hole is arranged in a second, opposite end of the gas distributing pipe 200. Even one hole 208 works.

As a result of the gas driven propulsion and the swivel 400, the filter cleaning device 1 will rotate around the longitudinal centre axis CA of the holder 100 with a rotational sweeping motion while directing a substantially radial cleaning air flow towards of the envelope wall 502 of the tubular filter element 500. Since the gas distribution pipe 200 and the counterweight 300 are arranged on opposite sides of the swivel 400, a well-balanced and hence a low-frictional rotational movement of the filter cleaning device 1 is provided. This in turn causes less friction to the swivel 400 that must be overcome by the propelling gas flow. This means that there is no need for any electrical motor to propel the filter cleaning device 1. Instead, the rotational propulsion is provided for by the use of a portion of the gaseous flow that is supplied to the filter cleaning device 1 from the source of pressurized gas PGS.

The combined effect allows the provision of a filter cleaning device 1 that presents an overall better cleaning effect of a tubular filter element without causing an undue wear to the filter material. Further, the use of the pressurized gas as propulsion medium allows that any electrical motor can be omitted. Further, the reduced unbalance allows for an overall reduced friction which in turn allows an improved efficiency of the inherent energy in the pressurized gas flow that is supplied to the filter cleaning device. And, not at least, the overall improved balance allows for a swivel that uses cheaper roller bearings rather than expensive ball bearings. The omission of an electrical motor and usage of cheaper bearings allows for an overall cheaper product.

Also, the filter cleaning device 1 allows a simple replacement of the tubular filter element 500 when its life length has been reached. The filter cleaning device 1 is removed by disconnecting the fasteners of the connecting arrangement 107. The filter cleaning device 1 is thereafter lifted in the axial direction away from the tubular filter element 500. This reduces the risk of any contact with the tubular filter element and especially with its exterior, dirty side.

## Claims

1. A filter cleaning device (1), the device (1) comprising a holder (100), a gas distributing pipe (200), a counterweight (300) and a swivel (400), wherein
the swivel (400) is rotatably connected to the holder (100);
the gas distributing pipe (200) and the counterweight (300) are connected to the swivel (400) to allow a rotational sweeping motion of the gas distributing pipe (200) and the counterweight (300) around a longitudinal centre axis of the holder (100);
the gas distributing pipe (200) and the counterweight (300) are arranged diametrically opposite each other on the swivel (400);
wherein the gas distributing pipe (200) along a longitudinal extension thereof comprises a first plurality of gas emitting holes (206) configured to allow emission of a gaseous cleaning flow with an angle of 0-15 degrees in view of a virtual plane (VP) spanned by the gas distributing pipe (200) and the longitudinal centre axis of the holder (100); and
wherein the gas distributing pipe (200) along the longitudinal extension thereof further comprises a second plurality of gas emitting holes (208) configured to allow emission of a gaseous propelling flow with an angle of 75-105 degrees in view of said virtual plane (VP).

2. The filter cleaning device according to claim 1, wherein the holes in the first plurality of holes (206) are equidistantly distributed along the longitudinal extension of the gas distributing pipe (200).

3. The filter cleaning device according to claim 1 or 2, wherein the second plurality of holes (208) comprise less than five holes, and more preferred three or less than three holes distributed along the longitudinal extension of the gas distributing pipe (200).

4. The filter cleaning device according to any of the preceding claims, wherein the counterweight (300) is arranged in level with or below the swivel (400).

5. The filter cleaning device according to any of the preceding claims, wherein the filter cleaning device (1) and the gas distributing pipe (200) is configured to be connected to a source of pressurized gas (PGS).

6. The filter cleaning device according to any of the preceding claims, wherein the gas distributing pipe (200) is substantially straight.

7. The filter cleaning device according to any of the preceding claims, wherein the holes in one or both of the first and second plurality of holes (206; 208) are provided with nozzles (207).

8. The filter cleaning device according to any of the preceding claims, wherein the holes in the first and second plurality of holes (206; 208) have different sizes and/or cross sections.

9. The filter cleaning device according to any of the preceding claims, wherein the filter cleaning device (1) comprises a continuous gas channel (202) extending through the holder (100), the swivel (400) and the gas distributing pipe (200).

10. The filter cleaning device according to any of the preceding claims, wherein the filter cleaning device (1) is configured to be suspended to extend in a downwardly extending direction inside a tubular filter element (500).

11. The filter cleaning device according to any of the preceding claims, wherein the holder (100) comprises a connecting arrangement (107) allowing the filter cleaning device (1) to be removably connected to a support surface of the tubular filter element (500) or to a support surface in a filter box (600) with the filter cleaning device (1) hanging downwardly into the tubular filter element (500).

12. A gas purification system (1000) comprising a filter box (600) containing a tubular filter element (500), a support surface being part of or arranged above the tubular filter element (500), and a filter cleaning device (1) according to any of the features 1-11, said filter cleaning device (1) being removably connected to the support surface.

13. The gas purification system according to claim 12, wherein the filter cleaning device (1) is arranged to extend in a downward direction inside the tubular filter element (500) with the longitudinal centre axis of the holder (100) of the filter cleaning device (1) coinciding with the longitudinal centreline of the tubular filter element (500).

14. The gas purification system according to any of claims 11-12, wherein the gas purification system (1000) is part of a welding system.

15. Use of a filter cleaning device according to any of claims 1-10 in a filter box (600) forming part of a welding system.
